# EUROPEAN PATENT SPECIFICATION

(11) **EP 3 826 474 B1**
(45) Date of publication and mention of the grant of the patent: **20.08.2025**
(21) Application number: 19742038.3
(22) Date of filing: 18.07.2019
(51) Int. Cl.: A23L 2/60, A23L 27/30

(54) **STEVIOL GLYCOSIDE AGGREGATES WITH SPECIFIC PARTICLE SIZE DISTRIBUTION**
STEVIOLGLYKOSID-AGGREGATE MIT SPEZIFISCHER PARTIKELGRÖSSENVERTEILUNG
AGRÉGATS DE STÉVIOL GLYCOSIDE À DISTRIBUTION GRANULOMÉTRIQUE SPÉCIFIQUE

(30) Priority: 24.07.2018 EP 18185309
(43) Date of publication of application: 02.06.2021
(73) Proprietor: DSM IP Assets B.V., 6221 BE Maastricht (NL)
(72) Inventor: GALAEV, Igor, 6100 AA ECHT (NL); SPROS, Ferdinand, Antoine, 6100 AA ECHT (NL)
(74) Representative: dsm-firmenich IP
(86) International application number: PCT/EP2019/069444
(87) International publication number: WO 2020/020755

(56) References cited:
- WO-A1-2011/094702
- WO-A1-2017/009294
- WO-A1-2017/095932
- US-A1- 2007 116 838
- US-A1- 2011 244 094

## Description

### Field

The disclosure relates to the field of food ingredients, specifically to sweeteners, more specifically to steviol glycoside aggregates and Rebaudioside M aggregates with a specific particle size range.

### Background

The leaves of the perennial herb, *Stevia rebaudiana* Bertoni, accumulate quantities of intensely sweet compounds known as steviol glycosides. Whilst the biological function of these compounds is unclear, they have commercial significance as alternative high potency sweeteners. These sweet steviol glycosides have functional and sensory properties that appear to be superior to those of many high potency sweeteners. In addition, studies suggest that stevioside can reduce blood glucose levels in Type II diabetics and can reduce blood pressure in mildly hypertensive patients. Steviol glycosides accumulate in Stevia leaves where they may comprise from 10 to 20% of the leaf dry weight. Stevioside and rebaudioside A are both heat and pH stable and suitable for use in carbonated beverages and many other foods. Stevioside is between 110 and 270 times sweeter than sucrose, rebaudioside A between 150 and 320 times sweeter than sucrose. In addition, rebaudioside D is also a high-potency diterpene glycoside sweetener which accumulates in Stevia leaves. It may be about 200 times sweeter than sucrose. Rebaudioside M is a further high-potency diterpene glycoside sweetener. It is present in trace amounts in certain stevia variety leaves and has a superior taste profile.

Rebaudioside M is known from the art as a steviol glycoside and is available in various stevia compositions. CN103068262A relates to superfine particles of stevia compounds that are smaller than about 20 µm; it was considered that the superfine particles have reduced aftertaste. JP2008007420 relates to drug particles having an average particle size of between 80 - 500 µm comprising stevia as a sweetener to reduce bitterness. MX2017000229A relates to a composition comprising from 7% to 9% by weight of particles of the *Stevia rebaudiana* plant with a particle size of between 300 - 400 µm and, 91% to 93% by weight of a milled dry fruit with a particle size of up between 300 - 400 µm. WO2011/094702A1 relates to steviol glycoside agglomerates rich in rebaudioside A, with particle size of about 50 to about 425 µm and a process for producing said agglomerates comprising providing steviol glycoside powder comprising about 70-99.5% w/w rebaudioside A, fluidizing the powder, applying solvent on the fluidized powder to form agglomerates, and drying said agglomerates to about 2-8% solvent. In neither prior art, pure steviol glycosides or rebaudioside M particles are disclosed.

The limited solubility of steviol glycoside, specifically of rebaudioside M, can be problematic and can be improved. There is thus an urge to improve the solubility and thus to shorten the dissolution time of steviol glycoside, especially of rebaudioside M.

### Summary

The disclosure relates to a sweetener composition comprising steviol glycoside aggregates, wherein at least 80% w/w of the steviol glycoside aggregates, based on the total weight of steviol glycoside aggregates in the composition, have a particle size that is within a range of about 500 µm to about 1 mm or has a particle size that is within a range of about 1 mm to about 2 mm, wherein the aggregates are crystal aggregates, wherein the amount of steviol glycoside aggregates in the composition is at least 70% w/w, based on the total weight of the composition and wherein at least 60% w/w of the steviol glycoside aggregates is rebaudioside M aggregates. The disclosure further relates to a food product comprising the sweetener composition according to the disclosure.

The disclosure further relates to a process for the preparation of a food product, comprising contacting the food product with the sweetener composition according to the disclosure.

The disclosure further relates to a process for the production of rebaudioside M aggregates, comprising:
- providing an aqueous composition that is essentially free of water-miscible solvents, comprising steviol glycoside crystals and water,
- drying of the steviol glycoside crystals to obtain steviol glycoside crystal aggregates, and,
- sieving the steviol glycoside crystal aggregates to obtain the desired particle size range, wherein the desired particle size range of rebaudioside M aggregates is about 500 µm to about 1 mm or has a particle size that is within a range of about 1 mm to about 2mm.

### Detailed description

The invention is described in the claims.

The inventors arrived at the surprising finding that steviol glycoside crystal aggregates with a particle size within a specific range dissolute substantially faster in water than steviol glycoside crystal aggregates outside that specific particle size range. In all embodiments of the disclosure, the particle size of the steviol glycoside aggregates is construed as being determined by sieving as performed in the examples herein. A typical sieving is performed as follows. A typical sieve analysis involves a nested column of sieves with wire mesh cloth (screen). A representative weighed sample is poured into the top sieve which has the largest screen openings. Each lower sieve in the column has smaller openings than the one above. At the base is a round pan, called the receiver. The column is typically placed in a mechanical shaker. The shaker shakes the column, usually for some fixed amount of time. After the shaking is complete the material on each sieve is weighed. The weight of the sample of each sieve is then divided by the total weight to give a percentage retained on each sieve.

Accordingly, the present disclosure provides for a sweetener composition comprising steviol glycoside aggregates, wherein at least 80% w/w, 81, 82, 83, 84, 85, 86, 87, 88, 89, 90, 91, 92, 93, 94, 95, 96, 97, 98, 99 or 100% w/w of the steviol glycoside aggregates, based on the total weight of steviol glycoside aggregates in the composition, has a particle size that is within a range of about 500 µm to about 1 mm or has a particle size that is within a range of about 1 mm to about 2 mm. Herein, the sweetener composition is referred to as the sweetener composition according to the disclosure; it may be used as a sweetener, but also for other purposes such as a sweetness enhancer and a flavour enhancer. Herein, the steviol glycoside aggregates are referred as the steviol glycoside aggregates according to the disclosure.

In the sweetener composition according to the disclosure, at least 80% w/w, 81, 82, 83, 84, 85, 86, 87, 88, 89, 90, 91, 92, 93, 94, 95, 96, 97, 98, 99 or 100% w/w of the steviol glycoside aggregates, based on the total weight of steviol glycoside aggregates in the composition, may have a particle size within a range of about 500 µm to about 1 mm or may have a particle size within a range of 500 µm to 1 mm. In the sweetener composition according to the disclosure, at least 80% w/w, 81, 82, 83, 84, 85, 86, 87, 88, 89, 90, 91, 92, 93, 94, 95, 96, 97, 98, 99 or 100% w/w of the steviol glycoside aggregates, based on the total weight of steviol glycoside aggregates in the composition, may have a particle size within a range of about 1 mm to about 2 mm or may have a particle size within a range of 1 mm to 2 mm. The sweetener composition according to the disclosure is preferably a dry composition. Herein, "percentage (%) w/w" means the weight percentage of a compound on a dry weight basis. The composition of the disclosure may be provided to consumers and users in any form suitable for delivery into the product to be sweetened, including sachets, packets, bulk bags or boxes and cubes. The composition may be delivered as a unit dose or in bulk form.

In the sweetener composition according to the disclosure, the steviol glycoside aggregates may comprise at least 80% w/w, 81, 82, 83, 84, 85, 86, 87, 88, 89, 90, 91, 92, 93, 94, 95, 96, 97, 98, 99 or 100% w/w pure steviol glycoside based on the total weight of steviol glycoside aggregates in the composition. The purity of a composition according to the disclosure may be measured using methods known to those of ordinary skill in the art. One such method includes high performance liquid chromatography (HPLC).

In the sweetener composition according to the disclosure, the (weight) percentage of humidity of the steviol glycoside aggregates is at most about 15%, such as at most 1%, 2%, 3%, 4%, 5%, 6%, 7%, 8%, 9%, 10%, 11%, 12%, 13%, 14%, 15%, 16%, 17%, 18%, 19% or at most 20%.

In the sweetener composition according to the disclosure, the steviol glycoside may be or may have been produced by any means known to the person skilled in the art. The steviol glycoside may e.g. be one obtained from the *Stevia rebaudiana* plant or by enzymatic (bio)conversion of steviol or of a steviol glycoside such as e.g. in WO2017031424 and in US20180146700. The steviol glycoside may be produced by fermentation, such as described in WO2015/007748, US20180155751. A process for the preparation of a steviol glycoside may thus comprise fermenting a recombinant host as described e.g. in WO2015/007748 example 7 which is capable of producing at least one steviol glycoside in a suitable fermentation medium, and optionally recovering the steviol glycoside. The fermentation medium used in the process for the production of a steviol glycoside may be any suitable fermentation medium which allows growth of a particular host cell such as a eukaryotic host cell. The essential elements of the fermentation medium are known to the person skilled in the art and may be adapted to the host cell selected. Preferably, the fermentation medium comprises a carbon source selected from the group consisting of plant biomass, celluloses, hemicelluloses, pectines, rhamnose, galactose, fucose, fructose, glucose, maltose, maltodextrines, ribose, ribulose, or starch, starch derivatives, sucrose, lactose, fatty acids, triglycerides and glycerol. Preferably, the fermentation medium also comprises a nitrogen source such as ureum, or an ammonium salt such as ammonium sulphate, ammonium chloride, ammonium nitrate or ammonium phosphate. The fermentation process according to the present disclosure may be carried out in batch, fed-batch or continuous mode. A separate hydrolysis and fermentation (SHF) process or a simultaneous saccharification and fermentation (SSF) process may also be applied. A combination of these fermentation process modes may also be possible for optimal productivity. A SSF process may be particularly attractive if starch, cellulose, hemicellulose or pectin is used as a carbon source in the fermentation process, where it may be necessary to add hydrolytic enzymes, such as cellulases, hemicellulases or pectinases to hydrolyse the substrate. It may be advantageous to use a recombinant eukaryotic host according to the disclosure in the process since most eukaryotic cells do not require sterile conditions for propagation and are insensitive to bacteriophage infections. In addition, eukaryotic host cells may be grown at low pH to prevent bacterial contamination. The recombinant host may be a facultative anaerobic microorganism. A facultative anaerobic recombinant host may be propagated aerobically to a high cell concentration. This anaerobic phase may then be carried out at high cell density which may substantially reduce the fermentation volume required and may minimize the risk of contamination with aerobic microorganisms. The fermentation process for the production of a steviol glycoside according to the present disclosure may be an aerobic or an anaerobic fermentation process. An anaerobic fermentation process may be herein defined as a fermentation process run in the absence of oxygen or in which substantially no oxygen is consumed, preferably less than 5, 2.5 or 1 mmol/L/h, and wherein organic molecules serve as both electron donor and electron acceptors. The fermentation process according to the present disclosure may also first be run under aerobic conditions and subsequently under anaerobic conditions. The fermentation process may also be run under oxygen-limited, or micro-aerobic, conditions. Alternatively, the fermentation process may first be run under aerobic conditions and subsequently under oxygen-limited conditions. An oxygen-limited fermentation process is a process in which the oxygen consumption is limited by the oxygen transfer from the gas to the liquid. The degree of oxygen limitation is determined by the amount and composition of the ingoing gas flow as well as the actual mixing/mass transfer properties of the fermentation equipment used. The production of a steviol glycoside in the process may occur during the growth phase of the host cell, during the stationary (steady state) phase or during both phases. It may be possible to run the fermentation process at different temperatures. The process for the production of a steviol glycoside may be run at a temperature which is optimal for the recombinant host. The optimum growth temperature may differ for each transformed recombinant host and is known to the person skilled in the art. The optimum temperature might be higher than optimal for wild type organisms to grow the organism efficiently under non-sterile conditions under minimal infection sensitivity and lowest cooling cost. Alternatively, the process may be carried out at a temperature which is not optimal for growth of the recombinant host. The process for the production of a steviol glycoside according to the present disclosure may be carried out at any suitable pH value. If the recombinant host is a yeast, the pH in the fermentation medium preferably has a value of below 6, preferably below 5,5, preferably below 5, preferably below 4,5, preferably below 4, preferably below pH 3,5 or below pH 3,0, or below pH 2,5, preferably above pH 2. An advantage of carrying out the fermentation at these low pH values is that growth of contaminant bacteria in the fermentation medium may be prevented. Such a process may be carried out on an industrial scale.

In the sweetener composition according to the disclosure, the aggregates may be crystal aggregates. The aggregates according to the disclosure may be comprise a binder (binding agent), e.g. a binder (binding agent) which is used in the process for the production of steviol glycosides according to the disclosure to form (or facilitate the forming of) aggregates from the crystals. In an embodiment according to the disclosure, the aggregates do not comprise a binder (binding agent). Typical binders (binding agents) are known to those skilled in the art and may include but are not limited to microcrystalline cellulose, gum such as gum tragacanth, or gelatine.

In the sweetener composition according to the disclosure, the amount of steviol glycoside aggregates in the composition may be at least 50% w/w, 55, 60, 65, 70, 75, 80, 85, 90, 95, or 100% w/w, based on the total weight of the composition.

In the sweetener composition according to the disclosure, at least 60% w/w, 65, 70, 75, 80, 85, 90, 95, 96, 97, 98, 99, or 100% w/w of the steviol glycoside aggregates is rebaudioside M aggregates.

In another embodiment, in the sweetener composition according to the disclosure, at least 10% w/w, 15, 20, 25, 30, 35, or 40% w/w of the steviol glycoside aggregates may be rebaudioside D aggregates. In yet another embodiment, in the sweetener composition according to the disclosure, at least 10% w/w, 15, 20, 25, 30, 35, 40, 45, 50, 55, 60, 65, 70, 75, 80, 85, 90, 95, 96, 97, 98, 99, or 100% w/w of the steviol glycoside aggregates may be a mixture of rebaudioside M and rebaudioside D aggregates. Typical mixtures of rebaudioside M and rebaudioside D will include at least 60%, at least 70%, such as at least 75%, 80, 85, 90, 95, 96, 97, 98, 99, or 100% w/w of rebaudioside M and at most at most 40% at most 30% w/w, such as at most 25%, 20, 15, 10, 5, 4, 3, 2, 1, or 0% w/w of rebaudioside D, based on the total weight of rebaudioside M plus rebaudioside D in the composition. In the sweetener composition according to the disclosure, the dissolution time of the steviol glycoside aggregates at room temperature is 10, 9, 8, 7, 6, 5 minutes or less when preparing 100ml of a 1g/L solution. The person skilled in the art knows how to prepare such solution.

The sweetener composition according to the disclosure, may consist of the steviol glycoside crystal aggregates according to the disclosure or may further comprise an additional sweetening agent, preferably selected from the group consisting of: stevia extract, steviol glycosides, stevioside, rebaudioside A, rebaudioside B, rebaudioside C, rebaudioside D, rebaudioside E, rebaudioside F, dulcoside A, steviolbioside, rubusoside, other steviol glycosides found in *Stevia rebaudiana Bertoni* plant and mixtures thereof, Luo Han Guo extract, mogrosides, high-fructose corn syrup, corn syrup, invert sugar, fructooligosaccharides, inulin, inulooligosaccharides, coupling sugar, maltooligosaccharides, maltodextins, corn syrup solids, glucose, maltose, sucrose, lactose, aspartame, saccharin, sucralose, advantame, cyclamate, acesulphame-K, neotame isomaltose, lactitol, mannitol, maltitol, sorbitol, tagatose, trehalose, allulose xylitol, erythritol, sugar alcohols, sweet proteins, and a combination thereof.

The sweetener composition according to the disclosure, may comprise further compounds such as but not limited to a flavouring agent, preferably selected from the group consisting of: lemon, orange, fruit, banana, grape, pear, pineapple, mango, bitter almond, cola, cinnamon, sugar, cotton candy, vanilla, and a combination thereof.

The sweetener composition according to the disclosure, may further comprise a food ingredient selected from the group consisting of: acidulants, organic and amino acids, colouring agents, bulking agents, modified starches, gums, texturizers, preservatives, antioxidants, emulsifiers, stabilisers, thickeners, gelling agents, and a combination thereof.

The sweetener composition according to the disclosure may be essentially free of water-miscible solvents. The term "essentially free of water-miscible solvents" is defined herein below.

In a second aspect, the disclosure provides for a food product comprising the sweetener composition according to the first aspect or fourth aspect of the disclosure. Such food product is herein referred to as a food product according to the disclosure. The food product may be any kind of food product to which it is desired to add a sweetener such as sugar or a sweetener as described elsewhere herein. The sweetener composition according to the disclosure may be mixed in the food product with another compound, such as another sweetener compound, such as the ones described elsewhere herein. The features of this aspect are the same as the features of the first aspect of the disclosure. The food product may be a beverage, chewing gum, dairy product such as yoghurt, yoghurt drink, milk, flavored milk drink, chocolate drink, bakery product such as bread, cake, cookies, cereal or cereal-based food, nutraceutical, pharmaceutical, edible gel, confectionery product, cosmetic, toothpastes or other oral cavity composition, etc. In addition, the composition according to the disclosure may be used as a sweetener not only for drinks, foodstuffs, and other products dedicated for human consumption, but also in animal feed and fodder. The composition according to the disclosure may be used in combination with a sweetener suppressor if desired, such as a natural sweetener suppressor. It may be combined with an umami taste enhancer, such as an amino acid or a salt thereof.

Examples of products where a composition according to the disclosure may be used as a sweetening compound can be beverages, e.g. alcoholic beverages such as vodka, wine, beer, liquor, sake, etc.; natural juices, refreshing drinks, carbonated soft drinks, diet drinks, zero calorie drinks, reduced calorie drinks and foods, instant juices, instant coffee, powdered types of instant beverages, canned products, syrups, fermented soybean paste, soy sauce, vinegar, dressings, mayonnaise, ketchups, curry, soup, instant bouillon, powdered soy sauce, powdered vinegar, types of biscuits, rice biscuit, crackers, bread, chocolates, caramel, candy, chewing gum, jelly, pudding, preserved fruits and vegetables, fresh cream, jam, marmalade, flower paste, powdered milk, ice cream, sorbet, vegetables and fruits packed in bottles, canned and boiled beans, meat and foods boiled in sweetened sauce, agricultural vegetable food products, seafood, ham, sausage, fish ham, fish sausage, fish paste, deep fried fish products, dried seafood products, frozen food products, preserved seaweed, preserved meat, tobacco, medicinal products, and many others. In principle, it may have unlimited applications.

A food product according to the disclosure may be a beverage, non-limiting examples of which include non-carbonated soft drinks and carbonated soft drinks such as colas, ginger ales, root beers, ciders, fruit-flavored soft drinks (e.g., citrus-flavored soft drinks such as lemon, lime, pomelo, or orange), powdered soft drinks, and the like; fruit juices originating in fruits or vegetables, fruit juices including squeezed juices or the like, fruit juices containing fruit particles, fruit beverages, fruit juice beverages, beverages containing fruit juices, beverages with fruit flavorings, vegetable juices, juices containing vegetables, and mixed juices containing fruits and vegetables; sport drinks, energy drinks, near water and the like drinks (e.g., water with natural or synthetic flavouring agents); tea type or favorite type beverages such as coffee, cocoa, black tea, green tea, oolong tea and the like; beverages containing milk components such as milk beverages, coffee containing milk components, cafe au lait, milk tea, fruit milk beverages, drinkable yogurt, lactic acid bacteria beverages or the like; and dairy products. Generally, the amount of sweetener present in a sweetened composition varies widely depending on the particular type of sweetened composition and its desired sweetness. Those of ordinary skill in the art can readily discern the appropriate amount of sweetener to put in the sweetened composition. During the manufacturing of foodstuffs, drinks, pharmaceuticals, cosmetics, table top products, chewing gum the conventional methods such as mixing, kneading, dissolution, pickling, permeation, percolation, sprinkling, atomizing, infusing and other methods may be used. Thus, compositions which incorporate a composition of the disclosure can be made by any method known to those skilled in the art that provide homogenous even or homogeneous mixtures of the ingredients. These methods include dry blending, spray drying, agglomeration, wet granulation, compaction, co-crystallization and the like.

The food product according to the disclosure may be essentially free of water-miscible solvents. The term "essentially free of water-miscible solvents" is defined herein below.

In a third aspect, the disclosure provides for a process for the production of a food product, comprising contacting the food product with the sweetener composition according to the first or fourth aspect of the disclosure. The food product may be any kind of food product wherein it is desired to add a sweetener such as sugar or a sweetener as described elsewhere herein. The sweetener composition according to the disclosure may be mixed in the food product with another compound such as another sweetener compound, such as the ones described elsewhere herein. Also provided is a food product obtainable or obtained by the process of this aspect of the disclosure. Also provided is the use of the sweetener composition according to the disclosure in the preparation of a food product by contacting the sweetener composition according to the disclosure with a food product or a food product precursor product. The features of this aspect are the same as the features of the first aspect of the disclosure.

In a fourth aspect, the disclosure provides for a process for the production of rebaudioside M aggregates, comprising:
- providing an aqueous composition that is essentially free of water-miscible solvents, comprising steviol glycoside crystals and water,
- drying of the steviol glycoside crystals to obtain steviol glycoside crystal aggregates, and,
- sieving the steviol glycoside crystal aggregates to obtain the desired particle size range, wherein the desired particle size range of rebaudioside M aggregates is about 500 µm to about 1 mm or has a particle size that is within a range of about 1 mm to about 2mm.

In an embodiment according to the third or fourth aspect of the disclosure, in the process no binder (binding agent) is used to form or to facilitate the forming of aggregates from the crystals. The individual process steps are preferably those as described in WO2018/029272.

Herein, term "essentially free of water-miscible solvents" means that water is used comprising at most 10%, 9%, 8%, 7%, 6%, 5%, 4%, 3%, 2%, 1%, 0.5%, 0.4%, 0.3%, 0.2%, 0.1%, 100ppm, 50ppm, 25ppm, 15ppm, 10ppm, 5ppm, 4ppm, 3ppm, 2ppm, at most 1ppm or most preferably comprising 0% water-miscible solvents, the latter meaning that the amount of water-miscible solvent is below the detection limit. The person skilled in the art knows what water-miscible solvents in this technical field are, such as but not limited to isopropanol, n-propanol, ethanol and methanol.

In this fourth aspect, it is disclosed but not claimed a process for the production of a steviol glycoside aggregates, preferably rebaudioside M aggregates, comprising:
- crystallization of steviol glycoside from a mother liquid comprising at least 10 g/L such as at least 15, 20, 30, 40, 50, 60, 70, 80, 90, or at least 100g/L of steviol glycoside,
- separation of the steviol glycoside crystals from the mother liquid,
- drying of the steviol glycoside crystals to obtain steviol glycoside crystal aggregates, and optionally,
- sieving the steviol glycoside crystal aggregates to obtain the desired particle size range.

The process is preferably performed essentially free of water-miscible solvents, as defined herein above.

The individual process steps are preferably those as described in WO2018/029272.

In this fourth aspect, it is disclosed but not claimed a further process for the production of steviol glycoside aggregates, preferably rebaudioside M aggregates, comprising:
- providing a fermentation broth comprising the steviol glycoside,
- removing biomass,
- killing remaining microorganisms by a heat-shock step and use an optional clarification step to separate the steviol glycoside from the biomass,
- performing an optional purification step to remove high molecular weight impurities,
- performing a concentration step to increase to the concentration of the steviol glycoside before crystallization to at least 10g/L, such as at least 15, 20, 30, 40, 50, 60, 70, 80, 90, or at least 100g/L of steviol glycoside,
- performing a crystallization step and separate the crystals from the mother liquid,
- performing an optional dissolution and second crystallization step to remove impurities; separate the crystals from the mother liquid,
- drying the steviol glycoside crystals to yield steviol glycoside crystal aggregates and optionally sieving the steviol glycoside crystal aggregates to obtain the desired particle size range.

The process is preferably performed essentially free of water-miscible solvents, as defined herein above.

The individual process steps are preferably those as described in WO2018/029272. The fermentation broth may be obtained as described previously herein.

Several steps known to the person skilled in the art may be used in a process according to the disclosure, such as, but not limited to the following steps.

Concentration, if used, may be carried out by any convenient method. Typically, any concentrating step may or may not comprise chromatography to concentrate the amount of the desired steviol glycoside. Preferably any concentrating step does not comprise absorption chromatography to concentrate the amount of the desired steviol glycoside. That is to say, the method of the disclosure is preferably one in which adsorption chromatography is not used, i.e. is one where there is no step of adsorption chromatography. Adsorption chromatography is sometimes referred to as binding elution chromatography. The concentrating step, if used, may comprise: a combination of ultrafiltration and nanofiltration; evaporation; and/or spray-drying the solution in step (a) and then re-dissolving the spraydried material. A concentration step may comprise (i) ultrafiltration and nanofiltration; and/or (ii) evaporation, for example a combination of ultrafiltration and nanofiltration, followed by evaporation. Ultrafiltration may be carried out with a membrane with a membrane having a cut-off of from about 3kDa to about 15kDa, for example about 10kDa. Nanofiltration may be carried out with a membrane with a membrane having a nominal retention of sodium sulphate above 90% Crystallization of the steviol glycoside solution may be allowed to take place for a length of time sufficient ("precipitation time" or "cooling time") to obtain a desirable yield of the steviol glycoside. For example, in particular embodiments the crystallization of the steviol glycoside solution may proceed from about 0.5 hours to about 120 hours (5 days), about 12 hours to about 96 hours (4 days), about 24 hours (1 day) to about 72 hours (3 days), for about 48 hours (2 days), or for any length of time there between. In one embodiment steviol glycosides crystal aggregates (e.g. RebM crystal aggregates) may also be obtained by recovering the mother liquor obtained as described herein and crystallizing steviol glycosides, e.g. rebaudioside M, from the said mother liquor in the presence of methanol. Subsequently these crystals may be dried to yield crystal aggregates and optionally sieved to obtain crystal aggregates of the suitable particle size as described herein before.

Also provided are the steviol glycoside crystal aggregates obtainable by or obtained from the processes of this aspect of the disclosure.

In this aspect of the disclosure, the features are the same as in the first aspect of the disclosure.

### General definitions

Throughout the present specification and the accompanying claims, the words "comprise", "include" and "having" and variations such as "comprises", "comprising", "includes" and "including" are to be interpreted inclusively. That is, these words are intended to convey the possible inclusion of other elements or integers not specifically recited, where the context allows. The articles "a" and "an" are used herein to refer to one or to more than one (i.e. to one or at least one) of the grammatical object of the article. By way of example, "an element" may mean one element or more than one element.

The word "about" or "approximately" when used in association with a numerical value (e.g. about 10) preferably means that the value may be the given value (of 10) more or less 10%, or more or less 5% of the value.

Steviol glycoside is herewith defined as any of steviolmonoside, steviolbioside, rubusoside, dulcoside B, dulcoside A, rebaudioside B, rebaudioside G, stevioside, rebaudioside C, rebaudioside F, rebaudioside A, rebaudioside I, rebaudioside E, rebaudioside H, rebaudioside L, rebaudioside K, rebaudioside J, rebaudioside M, rebaudioside M2, rebaudioside D, rebaudioside D2, rebaudioside N, rebaudioside O, rebaudioside A, other steviol glycosides found in *Stevia rebaudiana Bertoni* or a synthetic steviol glycoside. A preferred steviol glycoside according to the disclosure is rebaudioside M.

A reference herein to a patent document or other matter which is given as prior art is not to be taken as an admission that that document or matter was known or that the information it contains was part of the common general knowledge as at the priority date of any of the claims.

The present invention is further illustrated by the following non-limiting examples:

### EXAMPLES

In the following examples, various embodiments of the invention are illustrated. From the above description and these Examples, one skilled in the art can make various changes and modifications of the disclosure to adapt it to various usages and conditions.

### Example 1:

Production of steviol glycoside crystal aggregates according to the invention.

Rebaudioside M crystals were obtained by the method as described in example 1 of WO2018/029272. A cake of Rebaudioside M crystals and free of water-miscible solvents was dried to obtain crystal aggregates. After drying, 750 grams of the crystal aggregates obtained were subjected to a sieving to obtain various particle size range of the steviol glycoside crystal aggregates. The sieves used were from Test Sieve certified ISO 3310-1 with the seizes indicated in Table 1; the apparatus used for sieving was a Retsch AS200 digit. The results are depicted in Table 1. Drying of the steviol glycoside crystals was performed in a conical vacuum dryer (Hosakawa Micron B.V.) at a temperature of 60 degrees Celsius (wall temperature of dryer). The steviol glycoside crystal cake was placed into the dryer, stirring was started, vacuum was applied and the temperature was raised to 60 degrees Celsius.

**Table 1: Characteristics of the sieved steviol glycoside crystal aggregates**

| **Sieves** | **Fraction, g** | **%** | **Cumulative%** | **Full sieve, g** | **Empty sieve, g** |
|---|---|---|---|---|---|
| <125 µm | 69.8 | 9.3 | 9.3 | 305.8 | 236.0 |
| 125<...>250 µm | 77.7 | 10.4 | 19.6 | 321.3 | 243.6 |
| 250<...>500 µm | 71.7 | 9.6 | 29.2 | 337.9 | 266.2 |
| 500<... >1000 µm | 112.4 | 15.0 | 44.2 | 433.3 | 320.9 |
| 1<...>2 mm | 210.5 | 28.0 | 72.2 | 567.8 | 357.3 |
| >2mm | 208.6 | 27.8 | 100.0 | 578.2 | 369.6 |
| Total | 750.7 | 100.0 | | | |

The total fraction of steviol glycoside crystal aggregates larger than 250µm was 80.4% (w/w based on the total weight of steviol glycoside crystal aggregates. The total fraction of steviol glycoside crystal aggregates larger than 250µm but smaller than 2 mm was 52.6% (w/w based on the total weight of steviol glycoside crystal aggregates.

Fractions with different particle size were tested for the speed of Rebaudioside M dissolution when preparing 1 g/l solution at room temperature. The dissolution was observed visually after certain periods of time registering the presence of clearly visible undissolved particles. The results are depicted in Table 2.

**Table 2: Dissolution characteristics of the different fractions of steviol glycoside crystal aggregates**

| **Particle size** | **Time for complete dissolution** | **Remarks** |
|---|---|---|
| <125 µm | 45 min | after 20 min some small particles were still visible |
| 125<...<250 µm | 45 min | after 20 min some small particles were still visible |
| 250<...<500 µm | 10 min | |
| 500<...<1000 µm | 10 min | |
| 1<...<2 mm | 10 min | |
| >2 mm | 10 min | big particles disintegrated after about 5 min and dissolved within 10 min |

It is clear that Rebaudioside M aggregates larger than 250µm dissolve substantially faster than Rebaudioside M aggregates smaller than 250µm.

## Claims

1. A sweetener composition comprising steviol glycoside aggregates, wherein at least 80% w/w of the steviol glycoside aggregates, based on the total weight of steviol glycoside aggregates in the composition, has a particle size that is within a range of about 500 µm to about 1 mm or has a particle size that is within a range of about 1 mm to about 2 mm, wherein the aggregates are crystal aggregates, wherein the amount of steviol glycoside aggregates in the composition is at least 70% w/w, based on the total weight of the composition and wherein at least 60% w/w of the steviol glycoside aggregates is rebaudioside M aggregates.

2. The sweetener composition according to claim 1, wherein the steviol glycoside aggregates comprise at least 80% w/w pure steviol glycoside based on the total weight of steviol glycoside aggregates in the composition, and/or wherein the weight percentage of humidity of the steviol glycoside aggregates is at most about 15%.

3. The sweetener composition according to any one of claims 1 or 2, wherein the steviol glycoside is produced by fermentation.

4. The sweetener composition according to any one of the preceding claims wherein the amount of steviol glycoside aggregates in the composition is at least 80% w/w based on the total weight of the composition.

5. The sweetener composition according to any one of claims 1 to 4, wherein at least 65% w/w, at least 70% w/w, at least 75% w/w, at least 80% w/w, at least 85% w/w, at least 90% w/w, at least 95% w/w, or 100% w/w of the steviol glycoside aggregates are rebaudioside M aggregates.

6. The sweetener composition according to any one of claims 1 to 5, wherein the dissolution time of the steviol glycoside aggregates at room temperature is 10 minutes or less when preparing 100ml of a 1g/L solution.

7. The sweetener composition according to any one of claims 1 to 6, further comprising an additional sweetening agent selected from the group consisting of: stevia extract, steviol glycosides, stevioside, rebaudioside A, rebaudioside B, rebaudioside C, rebaudioside D, rebaudioside E, rebaudioside F, dulcoside A, steviolbioside, rubusoside, other steviol glycosides found in *Stevia rebaudiana Bertoni* plant and mixtures thereof, Luo Han Guo extract, mogrosides, high-fructose corn syrup, corn syrup, invert sugar, fructooligosaccharides, inulin, inulooligosaccharides, coupling sugar, maltooligosaccharides, maltodextins, corn syrup solids, glucose, maltose, sucrose, lactose, aspartame, saccharin, sucralose, sugar alcohols, and a combination thereof.

8. A food product comprising the sweetener composition according to any one of claims 1 to 7.

9. A process for the production of a food product, comprising contacting the food product with the sweetener composition according to any one of claims 1 to 7.

10. A process for the production of rebaudioside M aggregates, comprising:
- providing an aqueous composition that is essentially free of water-miscible solvents, comprising steviol glycoside crystals and water,
- drying of the steviol glycoside crystals to obtain steviol glycoside crystal aggregates, and,
- sieving the steviol glycoside crystal aggregates to obtain the desired particle size range, wherein the desired particle size range of rebaudioside M aggregates is about 500 µm to about 1 mm or has a particle size that is within a range of about 1 mm to about 2mm.

11. The process according to claim 10 wherein the desired particle size range of the rebaudioside M aggregates is 500 µm to 1 mm.

12. The process according to claim 10 wherein the desired particle size range of the rebaudioside M aggregates is 1 mm to 2 mm.

## Patentansprüche

1. Süßstoffzusammensetzung, die Steviolglycosidaggregate umfasst, wobei mindestens 80 Gew.-% der Steviolglycosidaggregate, bezogen auf das Gesamtgewicht der Steviolglycosidaggregate in der Zusammensetzung, eine Teilchengröße aufweisen, die in einem Bereich von etwa 500 µm bis etwa 1 mm liegt, oder eine Teilchengröße aufweisen, die in einem Bereich von etwa 1 mm bis etwa 2 mm liegt, wobei die Aggregate Kristallaggregate sind, wobei die Menge an Steviolglycosidaggregaten in der Zusammensetzung mindestens 70 Gew.-%, bezogen auf das Gesamtgewicht der Zusammensetzung, beträgt und wobei mindestens 60 Gew.-% der Steviolglycosidaggregate Rebaudiosid-M-Aggregate sind.

2. Süßstoffzusammensetzung nach Anspruch 1, wobei die Steviolglycosidaggregate mindestens 80 Gew.-% reines Steviolglycosid, bezogen auf das Gesamtgewicht der Steviolglycosidaggregate in der Zusammensetzung, umfassen und/oder wobei der Gewichtsprozentsatz der Feuchtigkeit der Steviolglycosidaggregate höchstens etwa 15 % beträgt.

3. Süßstoffzusammensetzung nach Anspruch 1 oder 2, wobei das Steviolglycosid durch Fermentation hergestellt wird.

4. Süßstoffzusammensetzung nach einem der vorhergehenden Ansprüche, wobei die Menge an Steviolglycosidaggregaten in der Zusammensetzung mindestens 80 Gew.- %, bezogen auf das Gesamtgewicht der Zusammensetzung, beträgt.

5. Süßstoffzusammensetzung nach einem der Ansprüche 1 bis 4, wobei mindestens 65 Gew.-%, mindestens 70 Gew.-%, mindestens 75 Gew.-%, mindestens 80 Gew.-%, mindestens 85 Gew.-%, mindestens 90 Gew.-%, mindestens 95 Gew.-% oder 100 Gew.-% der Steviolglycosidaggregate Rebaudiosid-M-Aggregate sind.

6. Süßstoffzusammensetzung nach einem der Ansprüche 1 bis 5, wobei die Auflösungszeit der Steviolglycosidaggregate bei Raumtemperatur 10 Minuten oder weniger beträgt, wenn 100 ml einer 1 g/l-Lösung hergestellt werden.

7. Süßstoffzusammensetzung nach einem der Ansprüche 1 bis 6, weiterhin umfassend einen zusätzlichen Süßstoff ausgewählt aus der Gruppe bestehend aus: Steviaextrakt, Steviolglycosiden, Steviosid, Rebaudiosid A, Rebaudiosid B, Rebaudiosid C, Rebaudiosid D, Rebaudiosid E, Rebaudiosid F, Dulcosid A, Steviolbiosid, Rubusosid, anderen Steviolglycosiden, die sich in der Pflanze *Stevia rebaudiana Bertoni* finden, und Mischungen davon, Luo Han Guo-Extrakt, Mogrosiden, Maissirup mit hohem Fructosegehalt, Maissirup, Invertzucker, Fructooligosacchariden, Inulin, Inulooligosacchariden, Kupplungszucker, Maltooligosacchariden, Maltodextinen, Maissirup-Feststoffen, Glucose, Maltose, Saccharose, Lactose, Aspartam, Saccharin, Sucralose, Zuckeralkoholen und einer Kombination davon.

8. Lebensmittelprodukt, umfassend die Süßstoffzusammensetzung nach einem der Ansprüche 1 bis 7.

9. Verfahren zur Herstellung eines Lebensmittelprodukts, umfassend das Inkontaktbringen des Lebensmittelprodukts mit der Süßstoffzusammensetzung nach einem der Ansprüche 1 bis 7.

10. Verfahren zur Herstellung von Rebaudiosid-M-Aggregaten, umfassend:
- das Bereitstellen einer wässrigen Zusammensetzung, die im Wesentlichen frei von mit Wasser mischbaren Lösungsmitteln ist und Steviolglykosidkristalle und Wasser umfasst,
- das Trocknen der Steviolglycosidkristalle unter Erhalt von Steviolglycosidkristallaggregaten und
- das Sieben der Steviolglykosidkristallaggregate, um den gewünschten Teilchengrößenbereich zu erhalten, wobei der gewünschte Teilchengrößenbereich von Rebaudiosid-M-Aggregaten etwa 500 µm bis etwa 1 mm beträgt oder eine Teilchengröße aufweist, die in einem Bereich von etwa 1 mm bis etwa 2 mm liegt.

11. Verfahren nach Anspruch 10, wobei der gewünschte Teilchengrößenbereich der Rebaudiosid-M-Aggregate 500 µm bis 1 mm beträgt.

12. Verfahren nach Anspruch 10, wobei der gewünschte Teilchengrößenbereich der Rebaudiosid-M-Aggregate 1 mm bis 2 mm beträgt.

## Revendications

1. Composition d'édulcorant comprenant des agrégats de glycoside de stéviol, dans laquelle au moins 80 % p/p des agrégats de glycoside de stéviol, sur la base du poids total des agrégats de glycoside de stéviol dans la composition, ont une taille de particule qui est dans une plage d'environ 500 µm à environ 1 mm ou ont une taille de particule qui est dans une plage d'environ 1 mm à environ 2 mm, dans laquelle les agrégats sont des agrégats cristallins, dans laquelle la quantité d'agrégats de glycoside de stéviol dans la composition est d'au moins 70 % p/p, sur la base du poids total de la composition et dans laquelle au moins 60 % p/p des agrégats de glycoside de stéviol sont des agrégats de rébaudioside M.

2. Composition d'édulcorant selon la revendication 1, dans laquelle les agrégats de glycoside de stéviol comprennent au moins 80 % p/p de glycoside de stéviol pur sur la base du poids total des agrégats de glycoside de stéviol dans la composition, et/ou dans laquelle le pourcentage pondéral d'humidité des agrégats de glycoside de stéviol est d'au plus environ 15 %.

3. Composition d'édulcorant selon l'une quelconque des revendications 1 ou 2, dans laquelle le glycoside de stéviol est produit par fermentation.

4. Composition d'édulcorant selon l'une quelconque des revendications précédentes, dans laquelle la quantité d'agrégats de glycoside de stéviol dans la composition est d'au moins 80 % p/p sur la base du poids total de la composition.

5. Composition d'édulcorant selon l'une quelconque des revendications 1 à 4, dans laquelle au moins 65 % p/p, au moins 70 % p/p, au moins 75 % p/p, au moins 80 % p/p, au moins 85 % p/p, au moins 90 % p/p, au moins 95 % p/p, ou 100 % p/p des agrégats de glycoside de stéviol sont des agrégats de rébaudioside M.

6. Composition d'édulcorant selon l'une quelconque des revendications 1 à 5, dans laquelle le temps de dissolution des agrégats de glycoside de stéviol à température ambiante est de 10 minutes ou moins lors de la préparation de 100 ml d'une solution à 1 g/L.

7. Composition d'édulcorant selon l'une quelconque des revendications 1 à 6, comprenant en outre un agent édulcorant supplémentaire choisi dans le groupe constitué par : extrait de stévia, glycosides de stéviol, stévioside, rébaudioside A, rébaudioside B, rébaudioside C, rébaudioside D, rébaudioside E, rébaudioside F, dulcoside A, stéviolbioside, rubusoside, autres glycosides de stéviol présents dans la plante *Stevia rebaudiana Bertoni* et leurs mélanges, extrait de Luo Han Guo, mogrosides, sirop de maïs à haute teneur en fructose, sirop de maïs, sucre inverti, fructooligosaccharides, inuline, inulooligosaccharides, sucre de couplage, maltooligosaccharides, maltodextrines, solides de sirop de maïs, glucose, maltose, saccharose, lactose, aspartame, saccharine, sucralose, alcools de sucre, et une combinaison de ceux-ci.

8. Produit alimentaire comprenant la composition d'édulcorant selon l'une quelconque des revendications 1 à 7.

9. Procédé de production d'un produit alimentaire, comprenant la mise en contact du produit alimentaire avec la composition d'édulcorant selon l'une quelconque des revendications 1 à 7.

10. Procédé pour la production d'agrégats de rébaudioside M, comprenant :
- fourniture d'une composition aqueuse essentiellement exempte de solvants miscibles à l'eau, comprenant des cristaux de glycoside de stéviol et de l'eau,
- séchage des cristaux de glycoside de stéviol pour obtenir des agrégats cristallins de glycoside de stéviol, et
- tamisage des agrégats cristallins de glycoside de stéviol pour obtenir la plage de tailles de particules souhaitée, dans lequel la plage de tailles de particules souhaitée des agrégats de rébaudioside M est d'environ 500 µm à environ 1 mm ou a une taille de particules qui est dans une plage d'environ 1 mm à environ 2 mm.

11. Procédé selon la revendication 10, dans lequel la plage de tailles de particules souhaitée des agrégats de rébaudioside M est de 500 µm à 1 **mm.**

12. Procédé selon la revendication 10, dans lequel la plage de tailles de particules souhaitée des agrégats de rébaudioside M est de 1 mm à 2 mm.
